# EUROPÄISCHE PATENTSCHRIFT

(11) **EP 1 319 320 B1**
(45) Veröffentlichungstag und Bekanntmachung des Hinweises auf die Patenterteilung: **04.03.2009**
(21) Anmeldenummer: 01978139.2
(22) Anmeldetag: 13.09.2001
(51) Int. Cl.: H04W 8/04, H04L 29/12

(54) **VERFAHREN ZUM REGISTRIEREN EINES ENDGERÄTES IN EINEM PAKETDATENNETZWERK**
METHOD FOR LOGGING AN END TERMINAL IN A PACKET DATA NETWORK
PROCEDE D'ENREGISTREMENT D'UN TERMINAL DANS UN RESEAU DE DONNEES PAR PAQUETS

(30) Priorität: 19.09.2000 DE 10046343
(43) Veröffentlichungstag der Anmeldung: 18.06.2003
(73) Patentinhaber: SIEMENS AKTIENGESELLSCHAFT, 80333 München (DE)
(72) Erfinder: FITER, Bruno, 22300 Lannion (FR); GERLICH, Notker, 85540 Haar (DE)
(86) Internationale Anmeldenummer: PCT/DE2001/003522
(87) Internationale Veröffentlichungsnummer: WO 2002/025980

(56) Entgegenhaltungen:
- EP-A- 0 483 547
- EP-A- 1 083 768
- WO-A-00/21319
- WO-A-00/51374
- WO-A-00/76249
- ETSI: "Digital cellular telecommunications system (Phase 2+);General Packet Radio Service (GPRS); Service description; Stage 2; (GSM 03.60 version 7.3.1 Release 1998)" ETSI EN 301 344 V7.3.1, Juli 2000 (2000-07), Seiten 1-117, XP002203529 France

## Beschreibung

Die Erfindung betrifft ein Verfahren zum Registrieren eines Endgerätes in einem die Mobilität von Endgeräten unterstützenden Paketdatennetzwerk.

Für den Betrieb von Datenendgeräten in einem solchen Paketdatennetzwerk ist es erforderlich, dass jedem solchen Datenendgerät innerhalb des Netzes eine Adresse zugeteilt ist, die jeweils auf dem Netz übertragenen Datenpaketen beigefügt werden kann, um eine korrekte Weiterleitung der Datenpakete im Netz an das vorgesehene Empfänger-Endgerät zu ermöglichen. Das Internet-Protokoll Version 4 verwendet z.B. für jeden angeschlossenen Rechner eine Adresse, die als eine Folge von durch Punkte getrennten Zahlen dargestellt werden kann,wobei die Zahlen in einem hierarchisch gestaffelten System in ähnlicher Weise wie die Ziffern des von der Deutschen Post verwendeten Postleitzahlensystems den Standort des Rechners beschreiben. Eine solche hierarchische Struktur ermöglicht es einem Durchgangsknoten des Netzes, ein weiterzuleitendes Datenpaket in der richtigen Richtung weiterzubefördern, ohne dass er dafür die gesamte Struktur des Netzes im Detail kennen muss.

Die Tatsache, dass die Adressen in einem solchen Netz die geographische Struktur des Netzes widerspiegeln, führt jedoch zu Problemen, wenn ein Endgerät an verschiedenen Orten benutzt wird, an denen es der Netzstruktur zufolge unterschiedliche Adressen haben müsste. Nimmt man an, dass ein Endgerät mit der Adresse a1.b1.c1.d1 (wobei a1, b1, c1, d1 jeweils natürliche Zahlen kleiner als 255 sind), nicht über seinen zugeordneten Knoten a1.b1.c1, sondern an einem anderen Standort, über einen Knoten al.b2.c2 betrieben werden soll, so kann das Endgerät zwar möglicherweise Datenpakete ins Netz einschleusen, die ihr Ziel auch erreichen könnten; eine Antwort des Zielrechners, an den ein solches Datenpaket geschickt wird, wird dieser jedoch an die zieladresse a1.b1.c1.d1 schicken. Da das Endgerät sich an diesem Standort nicht befindet, läuft die Antwort ins Leere; eine Kommunikation kommt nicht zustande.

Um diesem Problem wenigstens teilweise abzuhelfen, ist das Mobile-IP-Protokoll entwickelt worden. In angepaßter Form ist dieses Protokoll auch Bestandteil des Internet Protokoll Version 6 Standards. Dieses Protokoll sieht vor, dass einem Endgerät, wenn es sich über einen Knoten, der nicht sein Heimatknoten ist, im Netzwerk registrieren lässt, eine zweite Adresse, die sogenannte Care-of-Adresse, zugeteilt wird. Diese Care-of-Adresse wird an einen sogenannten Home Agent am Heimatknoten des Endgeräts übermittelt. Der Home Agent ist daraufhin in der Lage, für das Endgerät bestimmte, d.h. mit dessen erster Adresse versehene, Datenpakete am Heimatknoten abzufangen und sie, mit der Care-of-Adresse versehen, getunnelt an das Endgerät an seinem tatsächlichen Standort weiterzuleiten.

Das Dokument WO 00/21319 beschreibt ein Paketdienst-Funkkommunikationssystem wie beispielsweise GPRS oder UMTS. Die aus GSM bekannte "attach procedure" wird dahingehend modifiziert, dass eine temporäre Identifikationsgröße eingeführt wird, welche der Mobilstation mitgeteilt wird und welche die Identifizierung desjenigen Netzwerkelementes möglich macht, das die Identifikationsgröße vergeben hat.

Die Registrierung eines Endgerätes in einem die Mobilität von Endgeräten unterstützenden Paketdatennetzwerk wie dem oben erwähnten Mobile-IP-Netzwerk ist mit einem erheblichen Signalisierungsaufwand verbunden, der die Transportkapazität des Netzes für Nutzdaten beeinträchtigt. Zum einen muss bei der Aufnahme eines Kontaktes des Endgeräts mit dem Netz innerhalb des Netzes eine freie Adresse gefunden werden, die dem Endgerät ohne Gefahr einer Kollision mit anderen an dem Netz betriebenen Endgeräten zugeteilt werden kann, zum anderen muss diese Adresse, wenn sie gefunden worden ist, an das Endgerät übermittelt werden, damit dieses eine korrekte Absenderadresse an von ihm gesendeten Paketen anbringen kann, und sie muss dem Home Agent mitgeteilt werden, damit dieser an die erste Adresse gesendete Pakete korrekt weiterleiten kann.

Dieser Nachteil ist besonders störend, wenn das Endgerät mit dem Paketdatennetzwerk über eine Funkverbindung eines Mobilfunknetzes kommuniziert, da hier Übertragungsbandbreite - speziell für die Übertragung von für die Funktionsfähigkeit des Systems relevanten Informationen wie etwa Adressen, die mit einem hochwirksamen Schutz gegen Übertragungsfehler übertragen werden müssen, knapp ist.

Die Aufgabe der Erfindung besteht darin, ein Verfahren anzugeben, das die Registrierung eines mobilen Endgerätes in einem Paketdatennetzwerk mit geringem Signalisierungsaufwand erlaubt.

Diese Aufgabe wird durch das Verfahren mit den Merkmalen des Patentanspruchs 1 gelöst. Das Verfahren basiert auf dem Gedanken, dass viele Kommunikationsnetze bei der Registrierung eines Endgerätes von diesem die Übertragung einer Kennung verlangen, die das Endgerät oder dessen Benutzer zumindest innerhalb des Netzes kennzeichnet, wobei diese Kennung - insbesondere im Falle eines Fernmeldenetzes - dazu dienen kann, die Benutzung des Netzes einem Benutzer zuordnen und in Rechnung stellen zu können, oder - eher im Falle eines Rechnernetzwerks - dazu dienen kann, die Berechtigung des Benutzers zum Zugriff auf das Netz und ggf. darin verfügbare Datenbestände zu überprüfen. Diese Kennung muss in jedem Fall vom Endgerät an das Netzwerk übertragen werden. Die in dieser Kennung enthaltene individualisierende Information kann daher, ohne eigens übertragen werden zu müssen, zur Berechnung einer Adresse herangezogen werden. Indem die Berechnung nach einem einheitlichen Verfahren nicht nur vom Netzwerk sondern auch vom Endgerät durchgeführt wird, verfügen schließlich beide über die gleiche Adresse für das Endgerät, ohne dass diese vom Netzwerk an das Endgerät hätte übertragen werden müssen.

Vorteilhafte Ausgestaltungen sind Gegenstand von abhängigen Ansprüchen.

Eine Umkehrbarkeit des Verfahrens ist wünschenswert, um zu gewährleisten, dass nicht zwei Endgeräten eine gleiche Adresse zugeteilt werden kann.

Es ist zweckmäßig, wenn die Kennung jedem Endgerät bei der Herstellung weltweit (und nicht etwa nur innerhalb des Paketdatennetzes) eindeutig zugeteilt wird, da dann - z. B. im Rahmen von Roaming - auch die Registrierung beliebiger Endgeräte in dem Paketdatennetz möglich wird, die normalerweise in einem fremden Netz eingesetzt werden.

Wenn das Endgerät ein mobiles Endgerät ist, bietet sich als Kennung besonders dessen IMSI (International Mobile Subscriber Identity) an.

Die Adresse des Endgeräts kann auf sehr einfache Weise durch Verketten der Kennung des Endgerätes mit einer Kennung des Paketdatennetzwerks gebildet werden.

Ein Ausführungsbeispiel wird nachfolgend anhand der Zeichnung näher erläutert. Es zeigen:
- Fig. 1: ein Schema eines Zugangsnetzes, das mobilen Endge- räten den Zugang zu einem Netzwerk wie etwa dem In- ternet ermöglicht, als Beispiel für ein Paketdaten- netzwerk, in dem das erfindungsgemäße Verfahren an- wendbar ist,
- Fig. 2: die Abfolge der wichtigsten beim Registrieren eines Endgeräts zwischen dem Endgerät und dem Zugangsnetz ausgetauschten Meldungen.

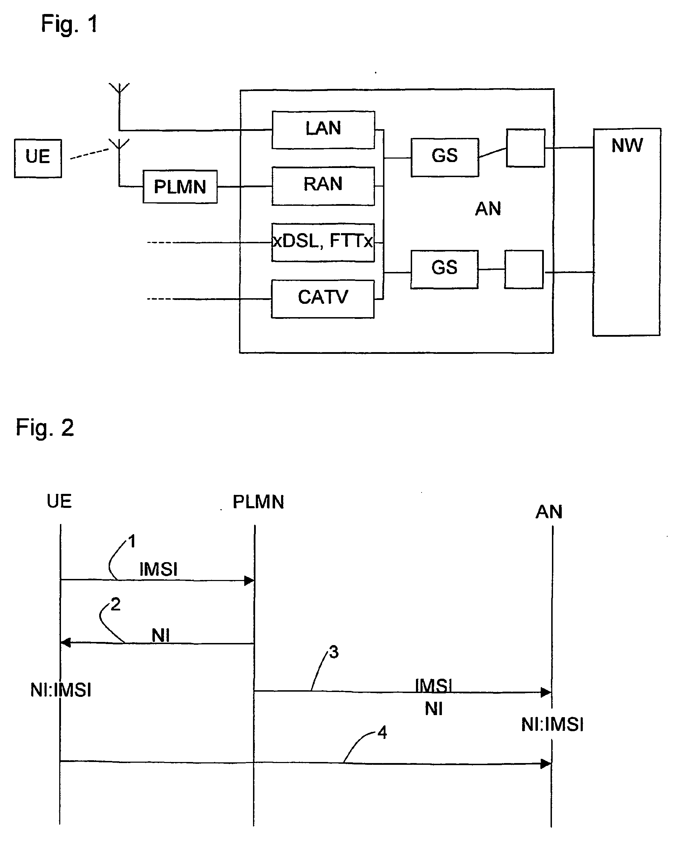

Wie aus Fig. 1 ersichtlich, besitzt das Zugangsnetz AN eine Mehrzahl von Gateway-Servern GS, die an verschiedenen Orten eines Landes aufgebaut sein können und jeweils eine Schnittstelle zu einem Netzwerk NW, etwa dem Internet besitzen. Die Gateway-Server GS sind in der Funktion voneinander unabhängig; sie sind mehrfach vorhanden, um die Zugangswege zum Netzwerk NW für die einzelnen Endgeräte UE nicht zu lang werden zu lassen.

Das Internet ist lediglich ein Beispiel für ein Netzwerk NW, für dessen Zugangsvermittlung das hier beschriebene Zugangsnetz AN anwendbar ist. Eine weitere Anwendung wäre z. B. die Anbindung mobiler Endgeräte UE von Mitarbeitern einer Firma an ein firmeneigenes Netzwerk NW.

Das Zugangsnetz AN umfasst ein IP-basiertes Funkzugangsnetz RAN, das die die Anbindung von Endgeräten UE über ein Funk-Kommunikationssystem PLMN unterstützt. Weitere, hier nicht im Detail betrachtete Möglichkeiten der Anbindung von Endgeräten sind ein drahtloses LAN, leitungsgebundene Breitbanddienste wie xDSL, FTTx oder Breitband-Kabelfernsehen CATV.

Das Funk-Kommunikationssystem PLMN hat eine von Mobilfunknormen wie GSM oder UMTS allgemein bekannte zellulare Struktur, die in der Figur nicht im Detail dargestellt ist. Es umfasst eine Mehrzahl von Basisstationen BS, die jeweils einer als Zelle bezeichneten geographischen Region zugeordnet sind und mit sich in der Zelle aufhaltenden Endgeräten kommunizieren können. Ein Basisstationscontroller steuert jeweils eine Mehrzahl von an ihn angeschlossenen Basisstationen. Die Basisstationscontroller sind mit Knoten des Funkzugangsnetzes RAN verbunden.

Fig. 2 zeigt schematisch den Ablauf der Registrierung eines Endgerätes UE im Funkzugangsnetz RAN. Wenn das Endgerät UE sich im Zugangsnetz RAN registrieren lassen will, um Daten mit dem Netzwerk NW oder mit anderen an das Zugangsnetz angeschlossenen Endgeräten auszutauschen, so muss es sich hierfür zunächst auf der Ebene des Mobilfunk-Kommunikationssystems einbuchen. Der Ablauf dieses Einbuchungsvorganges ist für diverse Mobilfunk-Kommunikationsnormen wie GSM, UMTS etc. detailliert festgelegt und braucht deshalb hier nicht im Detail beschrieben zu werden. Wesentlich für die vorliegende Erfindung ist, dass im Laufe dieses in Fig. 2 durch den Pfeil 1 symbolisierten Einbuchungsvorgangs das Endgerät UE eine Kennung an das Mobilfunk-Kommunikationssystem PLMN überträgt, die es letzterem erlaubt, die Identität des Endgeräts festzustellen und die Berechtigung des Endgeräts zur Nutzung der Ressourcen des Mobilfunk-Kommunikationssystems PLMN zu überprüfen. Diese Kennung umfasst zumindest die IMSI (International Mobile Subscriber Identity) des Endgerätes.

Der Einbuchungsvorgang in das Mobilfunk-Kommunikationssystem PLMN umfasst in üblicher Weise auch die Übertragung einer hier als Netzwerkidentifikator NI bezeichneten Kennung des Mobilfunk-Kommunikationssystems an das Endgerät UE (Pfeil 2), die es dem Endgerät bzw. dessen Benutzer ermöglicht, zu erkennen, mit welchem von eventuell mehreren zur Auswahl stehenden Systemen das Endgerät eingebucht ist.

Wenn die Überprüfung der Kennung positiv ausfällt und das Endgerät das Mobilfunk-Kommunikationssystem PLMN nutzen darf, und wenn außerdem das Mobilfunk-Kommunikationssystem PLMN feststellt, dass die vom Endgerät UE angeforderte Verbindung eine Paketdatenverbindung über das Funkzugangsnetz RAN ist, so gibt es in einer durch einen Pfeil 3 dargestellten Meldung die vom Endgerät UE gesendete Kennung IMSI sowie den Netzidentifikator NI an das Zugangsnetz RAN weiter.

Sowohl das Endgerät UE als auch das Zugangsnetz RAN verfügen somit über die Kenntnis der zwei Kennungen IMSI und NI. Beide bilden unabhängig voneinander eine Adresse durch Verbinden der zwei Kennungen zu einer Zeichenkette, deren erster Teil der Netzwerkidentifikator NI und deren zweiter Teil die IMSI ist. Eine Übertragung der Adresse per Funk, die aufwendig gegen Übertragungsfehler geschützt werden müsste und daher die Übertragung einer Informationsmenge erfordert, die die eigentliche Zeichenzahl der Adresse weit übersteigt, ist nicht erforderlich.

Da die IMSI per definitionem jedes weltweit existierende Mobilfunk-Endgerät eindeutig kennzeichnet, ist die so erzeugte Adresse zwangsläufig einmalig. Sie kann daher für die Datenleitung im Zugangsnetz eingesetzt werden, ohne dass eine Überprüfung erforderlich wäre, ob die Adresse bereits an ein anderes Endgerät vergeben ist. Der mit einer solchen Überprüfung bzw. der Suche nach einer noch nicht vergebenen Adresse einhergehende Signalisierungsaufwand wird daher vermieden.

Die so erzeugte Adresse kann daher unmittelbar nachdem sie erzeugt worden ist, vom Endgerät als Absenderkennzeichnung für von ihm an das Netzwerk NW gesendete Datenpakete (symbolisiert durch Pfeil 4) oder für über das Netzwerk NW an das Endgerät UE gesendete Datenpakete verwendet werden, ohne dass vorher irgendeine Art von Verständigung auf dem Funkweg zwischen Endgerät UE und Funkzugangsnetz RAN über die zu verwendende Adresse notwendig ist. Die Adressenerzeugung basiert ausschließlich auf Informationen, deren Funkübertragung für die Einbuchung des Endgeräts in das Mobilfunk-Kommunikationssystem PLMN ohnehin erforderlich ist.

## Patentansprüche

1. Verfahren zum Registrieren eines Endgerätes (UE) in einem die Mobilität von Endgeräten (UE) unterstützenden Paketdatennetzwerk (AN), bei dem dem Endgerät (UE) eine Adresse für den Empfang von Datenpaketen zugeteilt wird, und das Endgerät (UE) eine ihm zugeordnete Kennung (IMSI) an das Netzwerk (AN) überträgt,
**dadurch gekennzeichnet, dass** die Adresse nach einem einheitlichen Verfahren vom Endgerät (UE) und vom Netzwerk (AN) anhand der Kennung (IMSI) berechnet wird.

2. Verfahren nach Anspruch 1, **dadurch gekennzeichnet, dass** das Verfahren zur Berechnung der Adresse umkehrbar ist.

3. Verfahren nach Anspruch 1 oder 2, **dadurch gekennzeichnet, dass** die Kennung (IMSI) jedem Endgerät (UE) bei der Herstellung weltweit eindeutig zugeteilt wird.

4. Verfahren nach einem der vorhergehenden Ansprüche, **dadurch gekennzeichnet, dass** es für ein Mobilfunk-Endgerät (UE) als Endgerät (UE) angewendet wird, und dass die Kennung (IMSI) die IMSI des Mobilfunk-Endgerätes (UE) ist.

5. Verfahren nach einem der vorhergehenden Ansprüche, **dadurch gekennzeichnet, dass** die Adresse durch Verketten der Kennung (IMSI) des Endgerätes (UE) mit einer Kennung (NI) des Paketdatennetzwerks (AN) gebildet wird.

## Claims

1. Method for logging a terminal device (UE) in a packet data network (AN) which supports the mobility of terminal devices (UE), in which method the terminal device (UE) is assigned an address for receiving data packets, and the terminal device (UE) transmits to the network (AN) an identification (IMSI) which it has been assigned,
**characterised in that**
the address is calculated by the terminal device (UE) and by the network (AN) in accordance with a standard method on the basis of the identification (IMSI).

2. Method according to claim 1, **characterised in that** the method for calculating the address is reversible.

3. Method according to claim 1 or 2, **characterised in that** the identification (IMSI) is uniquely allocated to each terminal device (UE) during manufacture on a worldwide basis.

4. Method according to one of the preceding claims, **characterised in that** it is applied for a mobile radio terminal device (UE) as the terminal device (UE), and that the identification (IMSI) is the IMSI of the mobile radio terminal device (UE).

5. Method according to one of the preceding claims, **characterised in that** the address is formed by concatenating the identification (IMSI) of the terminal device (UE) with an identification (NI) for the packet data network (AN).

## Revendications

1. Procédé d'enregistrement d'un terminal (UE) dans un réseau de données par paquets (AN) supportant la mobilité de terminaux (UE), dans lequel une adresse pour la réception de paquets de données est affectée au terminal (UE), et dans lequel le terminal (UE) transmet au réseau (AN) une identification (IMSI) qui lui est affectée,
**caractérisé en ce que** l'adresse est calculée selon un procédé uniforme par le terminal (UE) et par le réseau (AN) à l'aide de l'identification (IMSI).

2. Procédé selon la revendication 1, **caractérisé en ce que** le procédé de calcul de l'adresse est réversible.

3. Procédé selon la revendication 1 ou 2, **caractérisé en ce que** l'identification (IMSI) est affectée à chaque terminal (UE) de manière univoque dans le monde entier lors de sa production.

4. Procédé selon l'une quelconque des revendications précédentes, **caractérisé en ce qu'**il est utilisé pour un terminal de radiocommunication mobile (UE), et **en ce que** l'identification (IMSI) est l'IMSI du terminal de radiocommunication mobile (UE).

5. Procédé selon l'une quelconque des revendications précédentes, **caractérisé en ce que** l'adresse est formée par enchaînement de l'identification (IMSI) du terminal (UE) à une identification (NI) du réseau de données par paquets (AN).
